# EUROPÄISCHE PATENTSCHRIFT

(11) **EP 3 592 477 B1**
(45) Veröffentlichungstag und Bekanntmachung des Hinweises auf die Patenterteilung: **21.04.2021**
(21) Anmeldenummer: 18708980.0
(22) Anmeldetag: 02.03.2018
(51) Int. Cl.: B08B 9/00, B08B 9/08, B08B 3/02, B01F 15/00, B65D 90/62

(54) **MISCHER MIT REINIGUNGSDÜSE**
MIXER COMPRISING CLEANING NOZZLE
MÉLANGEUR POURVU D'UNE BUSE DE NETTOYAGE

(30) Priorität: 08.03.2017 DE 102017104842
(43) Veröffentlichungstag der Anmeldung: 15.01.2020
(73) Patentinhaber: Maschinenfabrik Gustav Eirich GmbH & Co. KG, 74736 Hardheim (DE)
(72) Erfinder: SCHMITT, Clemens, 74731 Walldürn-Altheim (DE); DÖRR, Martin, 74731 Walldürn (DE)
(74) Vertreter: WSL Patentanwälte Partnerschaft mbB
(86) Internationale Anmeldenummer: PCT/EP2018/055182
(87) Internationale Veröffentlichungsnummer: WO 2018/162348

(56) Entgegenhaltungen:
- WO-A1-03/099472
- DE-A1- 2 903 951
- DE-U1-202013 100 812
- US-B1- 6 669 360
- US-B1- 8 839 810

## Beschreibung

Die vorliegende Erfindung betrifft einen Mischer mit einem eine Auslassöffnung aufweisenden Mischbehälter und einem Verschlussdeckel, welcher zwischen einer geschlossenen Position, in welcher der Verschlussdeckel die Auslassöffnung verschließt, und einer geöffneten Position, in welcher der Verschlussdeckel die Auslassöffnung freigibt, so dass Mischgut aus dem Mischbehälter über die Auslassöffnung entnommen werden kann, hin und her bewegt werden kann.

Der Mischer weist zumindest eine Reinigungsdüse, zur Reinigung der Auslassöffnung und/oder einem außerhalb des Mischbehälters angeordneten Mischgutauslaufs, und eine Flüssigkeitszufuhr zur Zufuhr von Reinigungsflüssigkeit zu der zumindest einen Reinigungsdüse auf.

Des Weiteren betrifft die vorliegende Offenbarung ein Verfahren zum Reinigen eines Austrittsbereichs und/oder eines Mischgutauslaufs eines Mischers mit einer Auslassöffnung und einem relativ zur Auslassöffnung bewegbaren Verschlussdeckel.

Ein solcher Mischer mit Auslassöffnung wird beispielsweise zur Aufbereitung von Beton verwendet und ist aus der DE 2903951 C3 bekannt. Die Aufbereitung von Frischbeton für die Herstellung von Betonwaren hat das Ziel, aus den eingesetzten Rohstoffen wie bspw. Sand, Kies, Zement und Wasser eine homogene Mischung mit einer gewünschten/vorwählbaren Konsistenz einzustellen und schließlich den fertig aufbereiteten Frischbeton für die weitere Bauteilherstellung zur Verfügung zu stellen.

Durch die Verwendung von Wasser in der Mischung werden besondere Anforderungen an die Dichtigkeit der Auslassöffnung gestellt, da bei verschlossenem Mischbehälter die zugegebene Flüssigkeit nicht unkontrolliert aus dem Verschlussbereich in den Mischgutauslauf übertreten darf, da es sonst zu einer Veränderung der Mischgutkonsistenz aufgrund gestörtem Flüssigkeitsanteil in der Mischung kommt.

Gleichzeitig führt die Verwendung von aushärtenden Stoffen wie Zement zu mit der Zeit festen, nicht abspülbaren Verkrustungen auf dem Verschlussdeckel, der Auslassöffnung sowie im Mischgutauslauf, die zu fortschreitenden Problemen bei der Dichtigkeit des Verschlusses und der Entleerung der Maschine führen können.

Sollen Betone mit besonders niedrigem Luftporengehalt hergestellt werden, so kann dies mit Hilfe der Vakuumaufbereitung erfolgen. Voraussetzung für die Durchführung des Verfahrens ist es jedoch, dass der Mischbehälter dann zusätzlich vakuumdicht verschlossen werden kann. Um die Vakuumdichtigkeit im Dauerbetrieb sicherstellen zu können, ist eine besonders gute Reinigung des Mischerverschlusses, insbesondere der den Verschlussdeckel umfassenden Dichtung und des Auslaufbereiches notwendig.

Der entsprechende Mischbehälter weist eine Auslassöffnung auf, in der der Verschlussdeckel hineinbewegt werden kann, um den Mischbehälter staub-, flüssigkeits- und gegebenenfalls vakuumdicht zu verschließen. Dabei ist der Deckel im Allgemeinen schwenkbar an einer Schwenkachse mit dem Maschinenrahmen des Mischers verbunden. Besonders bevorzugt erfolgt die Schwenkbewegung im Wesentlichen kreisförmig um eine horizontal oder im Wesentlichen horizontal angeordnete Schwenkachse.

In der Regel ist die Auslassöffnung an der Unterseite des Mischbehälters angeordnet, so dass beim Öffnen des Verschlussdeckels das Mischgut unmittelbar aus der Auslassöffnung über den Verschlussdeckel in den Mischgutauslauf strömt.

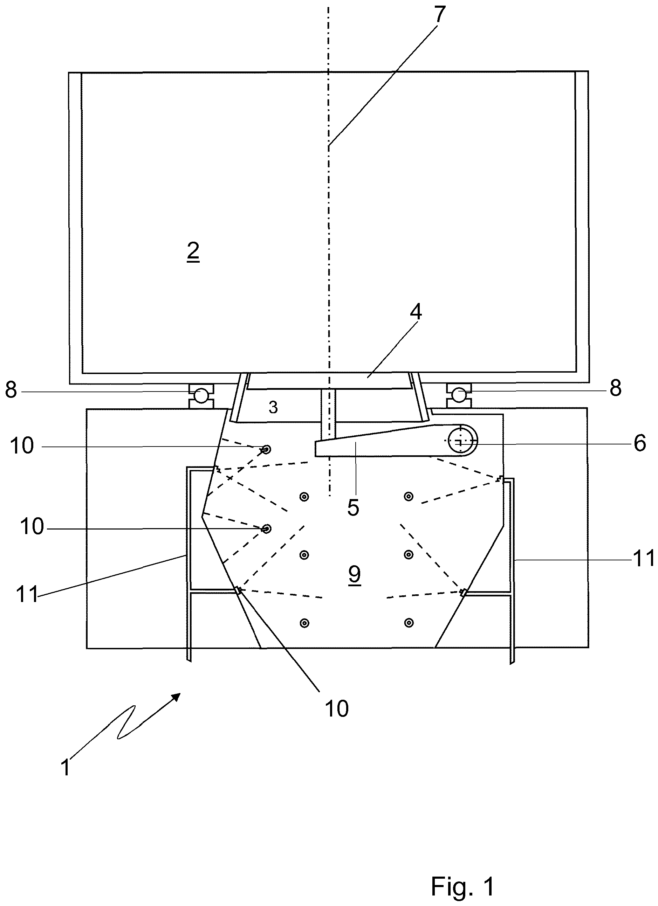

In Figur 1 ist schematisch eine Darstellung eines solchen Mischers des Standes der Technik gezeigt. Der bekannte Mischer 1 weist einen Mischbehälter 2 mit einer Auslassöffnung 3 auf, in der ein Verschlussdeckel 4 angeordnet ist. Der Verschlussdeckel 4 weist einen Schwenkarm 5 auf, mit dem er um eine Schwenkachse 6 gedreht und damit aus der Auslassöffnung 3 heraus und wieder in diese hereinbewegt werden kann. In der dargestellten Ausführungsform ist der Mischbehälter 2 um die vertikal angeordnete Drehachse 7 drehbar. Dafür sind entsprechende Lager 8 vorgesehen. Alternativ dazu kann die Drehachse 7 auch gegenüber der Vertikalen geneigt angeordnet sein.

Unterhalb des Mischbehälters 2 ist ein Mischgutauslauf 9 dargestellt.

Nachdem das sich im Mischbehälter 2 befindliche Mischgut entsprechend aufbereitet ist, kann das Mischgut entnommen werden, indem der Verschlussdeckel 4 aus der Auslassöffnung 3 mit Hilfe des Schwenkarms 5 um die Schwenkachse 6 herausgeschwenkt wird. Das sich im Mischbehälter 2 befindliche Mischgut wird dann aufgrund der Schwerkraft aus der Auslassöffnung 3 selbsttätig herausfallen bzw. durch die Drehbewegung des Mischbehälters unterstützt aus der Auslassöffnung herausströmen und dabei den Mischgutauslauf durchlaufen. Dabei ist es nicht zu vermeiden, dass die Wände des Mischgutauslaufes sowie der Verschlussdeckel einschließlich seiner Kantenflächen vom Mischgut verschmutzt wird. Es kann hier zu einer Ansammlung von Mischgutresten kommen, die zum einen verhindern, dass der Verschlussdeckel 4 staub, flüssigkeits- bzw. vakuumdicht in die Auslassöffnung 3 geführt werden kann. Zudem verringern die Anbackungen an den Wänden des Mischgutauslaufs die für die Entnahme des Mischguts zur Verfügung stehende Querschnittsfläche bzw. behindern die Abströmung des nachfolgenden Mischgutes.

Es ist daher bereits üblich, im Mischgutauslauf 9 Reinigungsdüsen 10 anzuordnen, welche über eine Flüssigkeitszufuhr 11 mit Reinigungsflüssigkeit versorgt werden können, um das Innere des Mischgutauslaufs, sowie den Schwenkarm als auch den Verschlussdeckel im geschlossenen, geöffneten bzw. teilgeöffneten Zustand mit Reinigungsflüssigkeit zu reinigen.

Die Anordnung der Reinigungsdüsen ist jedoch sehr aufwändig, zumal jede Reinigungsdüse einen entsprechenden Zufuhrkanal zur Zufuhr von Reinigungsflüssigkeit aufweisen muss. Zudem decken die Sprühstrahlformen der einzelnen Reinigungsdüsen immer nur einen kleinen Bereich des Mischgutauslaufes ab, so dass eine entsprechend große Anzahl von Reinigungsdüsen über die Höhe und den Umfang des Mischgutauslaufs vorgesehen werden muss, um den gesamten Mischgutauslauf 9, den Schwenkarm 5 und den Verschlussdeckel 4 möglichst vollständig zu reinigen. Da jedoch das Mischgut auch über die Reinigungsdüsen strömt und dort haften bleiben kann, kommt es zu Verschmutzungen der Reinigungsdüsen und damit verbunden zu Fehlfunktionen, so dass die Öffnungen der Reinigungsdüsen selbst regelmäßig gereinigt werden müssen.

Mischer mit Mischbehälter sind beispielsweise bekannt aus der US 8,839,810 B1, der WO 03/099472 A1, sowie der DE 20 2013 100 812 U1, welches Dokument einen Mischer gemäß dem Oberbegriff des Anspruchs 1 offenbart.

Aufgabe der vorliegenden Erfindung ist es daher, einen Mischer und ein Verfahren anzugeben, mit dem eine kostengünstige, effektive und einfache sowie betriebssichere Reinigung des Mischgutauslaufs und der Verschlussöffnung erfolgen kann.

Erfindungsgemäß wird diese Aufgabe durch einen Mischer gemäß Anspruch 1 gelöst. Dadurch, dass der Verschlussdeckel verschwenkt werden kann, führt dies automatisch zu einer Verschwenkbarkeit der entsprechenden Reinigungsdüse, so dass mit einer einzigen Reinigungsdüse ein vergleichsweise großer Bereich des Mischgutauslaufs gereinigt werden kann.

Dabei weist der Verschlussdeckel einen Schwenkarm auf, der um eine Schwenkachse drehbar gelagert ist. Dabei kann die Reinigungsdüse am Schwenkarm befestigt werden. Wesentlich ist, dass durch die Bewegung des Verschlussdeckels bzw. seines Schwenkarms eine Bewegung der Reinigungsdüse verursacht wird. Ist die Schwenkachse horizontal ausgerichtet, so bewirkt eine Hin- und Herbewegung des Verschlussdeckels eine Bewegung der Reinigungsdüse auf einer Kreisbahn.

Besonders bevorzugt ist die Reinigungsdüse an dem der Schwenkachse abgewandten Ende des Schwenkarms angeordnet.

Erfindungsgemäß verläuft die Flüssigkeitszufuhr durch die Schwenkachse, um den der Verschlussdeckel geschwenkt werden kann.

Somit kann die Flüssigkeitszuführung an die Düsen auf dem Schwenkarm fest, z.B. mittels einer Verrohrung, ausgeführt werden. Alternativ kann die Flüssigkeitszuführung ortsfest im Maschinenrahmen angeordnet werden, so dass eine flexible Überleitung an die Düsen bzw. den Schwenkarm, beispielsweise mittels Schläuchen, notwendig ist.

In einer weiteren bevorzugten Ausführungsform ist eine Mehrzahl von Reinigungsdüsen vorgesehen, die am Verschlussdeckel befestigt sind, wobei die Reinigungsdüsen vorzugsweise derart ausgebildet sind, dass sie im Betrieb eine sich erweiternde Sprühstrahlform zeigen.

Dabei ist es besonders bevorzugt, wenn die Mehrzahl von Reinigungsdüsen zusammen eine teilringförmige oder ringförmige Sprühstrahlform erzeugen. Beispielsweise können die einzelnen Reinigungsdüsen derart angeordnet sein, dass sie in gleichem Abstand von einem Mittelpunkt angeordnet sind. Mit anderen Worten können die Reinigungsdüsen auf einem gedachten Ring angeordnet sein, so dass sie im Betrieb einen um den Mittelpunkt herum ringförmigen oder teilringförmigen Sprühstrahl erzeugen.

Die Ausrichtung der Sprühdüsen erfolgt dabei bevorzugt unter einem oder mehreren Winkeln gegenüber der Mittelachse des Verschlussdeckels derart, dass unter Berücksichtigung des Sprühstrahlwinkels beim Verschwenken der Reinigungsdüsen sowohl die Auslassöffnung als auch der Mischgutauslauf möglichst vollständig, bevorzugt vollflächig und über die gesamte Höhe bis in die vorhandenen Ecken des Mischgutauslaufs hinein, von mindestens einem Sprühstrahl erfasst wird.

Weiterhin werden die Düsen unterhalb, d.h. auf der der Auslassöffnung abgewandten Seite des Verschlussdeckels derart angeordnet, dass sie zu keinem Zeitpunkt während der Entleerung des Mischgutes vom diesem überströmt werden bzw. mit Mischgut während der Entleerung in Kontakt kommen.

Durch Bewegen des Verschlussdeckels relativ zur Auslassöffnung kann somit nahezu der gesamte Mischgutauslauf mit Hilfe der Reinigungsdüsen gereinigt werden.

In einer bevorzugten Ausführungsform besitzt der Mischer einen drehbaren Mischbehälter. Durch geschickte Anordnung einer oder mehrerer Düsen kann dann auch die Innenseite der Auslassöffnung, bei geschlossenem oder fast geschlossenem Mischgutauslauf, gereinigt werden. Da die Auslassöffnung fest mit dem drehendem Behälter verbunden ist, wird durch das Ansprühen eines festen Punktes bzw. einer begrenzten Fläche im Bereich der Auslassöffnung in Verbindung mit der Drehbewegung des Mischbehälters eine nahezu vollständige Reinigung der Auslassöffnung über dem gesamten Umfang erreicht.

In einer weiteren besonders bevorzugten Ausführungsform ist vorgesehen, dass zumindest eine Reinigungsdüse in Richtung des Schwenkarms und/oder der Schwenkwelle ausgerichtet ist, um eventuell dort befindliche Mischgutreste wirkungsvoll zu entfernen.

Hinsichtlich des Verfahrens zum Reinigen eines Austrittsbereichs und/oder eines Mischgutauslaufs eines Mischers mit einer Auslassöffnung und einem relativ zur Auslassöffnung bewegbaren Verschlussdeckel sind die folgenden Schritte vorgesehen
A) Anordnen mindestens einer Reinigungsdüse an dem Verschlussdeckel oder Schwenkarm,
B) Zuführen von Reinigungsflüssigkeit zu der Reinigungsdüse und
C) Bewegen des Verschlussdeckels relativ zu der Auslassöffnung.

Weitere Vorteile, Merkmale und Anwendungsmöglichkeiten der vorliegenden Erfindung werden deutlich anhand der folgenden Beschreibung bevorzugter Ausführungsformen sowie der zugehörigen Figuren. Es zeigen:
- Figur 1: eine schematische Darstellung eines Mischers des Standes der Technik,
- Figur 2: eine schematische Darstellung einer ersten erfindungsgemäßen Ausführungsform mit einem Verschlussdeckel in einer geschlossenen Position,
- Figur 3: eine schematische Darstellung der Ausführungsform von Figur 2 mit dem Verschlussdeckel in der geöffneten Position und
- Figur 4: eine schematische Darstellung eines nicht-erfindungsgemäßen Mischers.

Figur 1 zeigt eine schematische Darstellung eines Mischers des Standes der Technik, der oben bereits im Detail beschrieben worden ist.

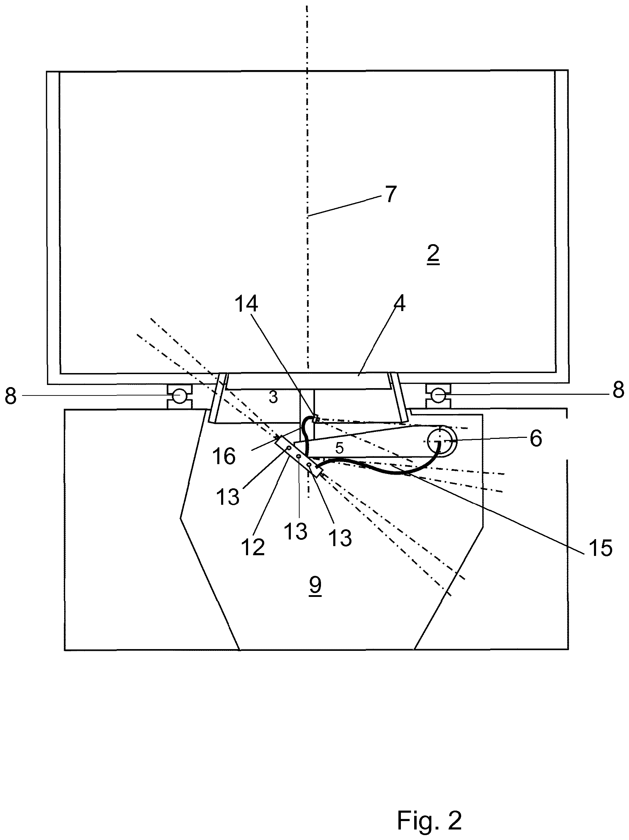

Figur 2 zeigt eine schematische Darstellung einer ersten Ausführungsform der Erfindung. Soweit möglich wurden die gleichen Bezugszeichen für die gleichen Elemente verwendet. Im Gegensatz zu der in Figur 1 gezeigten Ausführungsform des Standes der Technik ist die in Figur 2 dargestellte Reinigungsdüse 13 am Schwenkarm 5 befestigt. Hierzu weist der Schwenkarm 5 einen Verteiler 12 auf, an dem eine Vielzahl von Reinigungsdüsen 13 angeordnet sind. In der gezeigten Ausführungsform hat der Verteiler 12 einen kreisförmigen Querschnitt und weist an seiner umlaufenden Außenkante eine Vielzahl von durch Reinigungsdüsen 13 verschlossenen Öffnungen auf. Die Flüssigkeitszufuhr erfolgt über die Leitung 15, die sich durch die Schwenkachse 6 erstreckt. Mit der Leitung 15 kann der Verteiler 12 und damit alle an ihm angeordneten Reinigungsdüsen 13 mit Reinigungsflüssigkeit versorgt werden. Die von den Reinigungsdüsen 13 erzeugbaren Sprühstrahlen sind mit den strichpunktierten Linien beispielhaft angedeutet.

In der dargestellten Ausführungsform ist eine weitere Reinigungsdüse 14, welche über die Leitung 16, welche am Verteiler 12 angeschlossen ist, mit Reinigungsflüssigkeit versorgt wird, derart angeordnet, dass sie auf den Schwenkarm 5 bzw. die Schwenkachse 6 gerichtet ist.

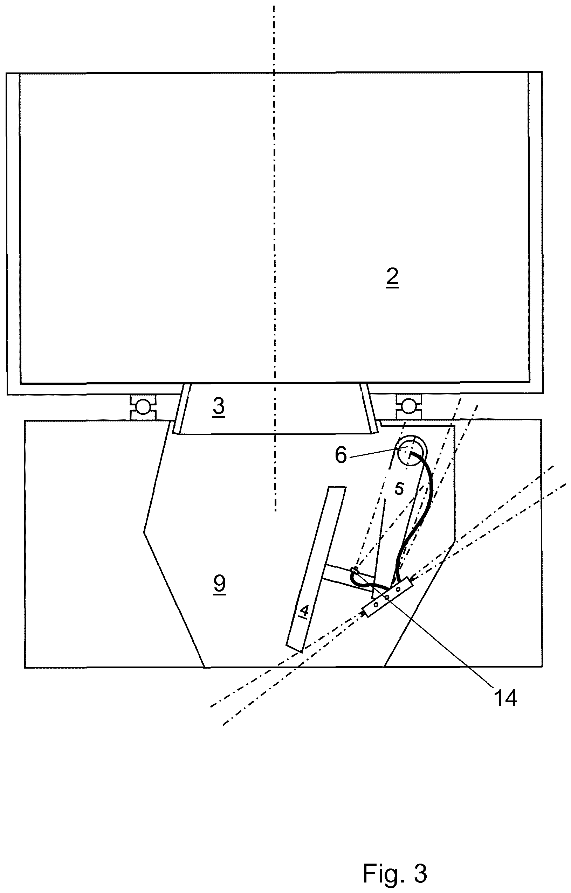

Figur 2 zeigt die erfindungsgemäße Ausführungsform mit geschlossenem Verschlussdeckel, d.h. der Verschlussdeckel befindet sich in der geschlossenen Position. Um Mischgut aus dem Mischbehälter 2 zu entnehmen, kann der Verschlussdeckel 4 um die Schwenkachse 6 verschwenkt werden und zwischen der in Figur 2 gezeigten geschlossenen Position und in der in Figur 3 gezeigten offenen Position hin- und her bewegt werden. Durch die Hin- und Her-Bewegung wird nicht nur der Verschlussdeckel 4 von der geschlossenen Position in die geöffnete Position bewegt, sondern darüber hinaus auch die sich am Verschlussdeckel bzw. an dem Schwenkarm 5 angeordneten Reinigungsdüsen hin und her bewegt, wodurch die durch die strichpunktierten Linien angedeuteten Sprühstrahlen eine große Fläche des Mischgutauslaufs überstreichen und reinigen.

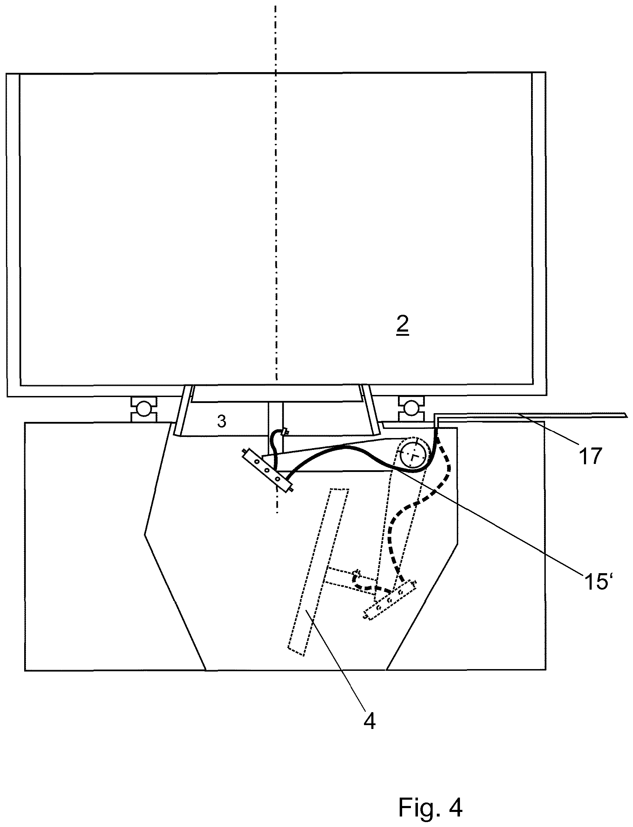

In Figur 4 ist eine Darstellung eines Mischers aufgeführt, die nicht von der Erfindung umfasst ist. Diese unterscheidet sich von der in den Figuren 2 und 3 gezeigten Ausführungsform lediglich durch eine alternative Flüssigkeitszufuhr 15'. Die Flüssigkeitszufuhr 15' verläuft bei der in Figur 4 gezeigten Ausführungsform nicht mehr durch die Schwenkachse 6, sondern ist mit einer stationären Leitung 17 mit dem Maschinenrahmen verbunden. Dies hat zur Folge, dass die Leitung 15' flexibel ausgebildet sein muss, da sich der Schwenkarm 5 relativ zu der stationären Leitung 17 bewegt. Beispielsweise kann die Leitung 15' als Schlauch ausgebildet sein.

Allen gezeigten Ausführungsformen ist gemein, dass, um eine möglichst vollständige Reinigung des Auslaufbereichs zu erzielen, zusätzlich zu den ringförmig angeordneten Düsen 13 an dem Verteiler 12 weitere Düsen 14 eingezeichnet sind, die den Schwenkarm selbst bzw. den Raum hinter der Drehachse des Schwenkarms reinigen. Eine der weiteren Düsen ist in den Figuren nicht zu erkennen, ihr entsprechender Sprühstrahl ist jedoch ebenfalls als strichpunktierte Linie dargestellt. Diese Düse wird zur Reinigung der hinter der Schwenkachse 6 befindlichen Wand bis hoch in die obere Ecke des Mischgutauslaufs eingesetzt.

Selbstverständlich können, wie im Stand der Technik gezeigt, im Mischgutauslauf 9 zusätzliche feststehende Düsen in der umschließenden Wandung angeordnet werden, um beispielsweise die Außenkante und Oberfläche des Verschlussdeckels 4 oder die Seiten des Schwenkarms 5 während der Schwenkbewegung zu reinigen.

Es versteht sich, dass die Düsen nicht unbedingt ringförmig angeordnet sein müssen, sondern beispielsweise auch auf einem halbkugelförmigen Verteiler, in mehreren Ringen, frei drehend oder in irgendeiner anderen Form verteilt angeordnet sein können. Weiterhin müssen die Düsen nicht ortsfest mit dem Schwenkarm bzw. dem Verschlussdeckel verbunden sein, sondern könnten auch auf einer zusätzlich kinematisch, um ein oder mehrere Raumachsen, bewegbaren Halterung befestigt werden. Die Düsen selbst können ein konstantes Sprühbild oder auch ein rotierendes oder pulsierendes Sprühbild erzeugen.

Grundsätzlich könnte jede Düse oder eine Mehrzahl von Düsengruppen getrennte Flüssigkeitszuführungen aufweisen und diese könnten über eine Steuerung ein vorgegebenes Sprühmuster durch wechselndes Öffnen und Schließen der Flüssigkeitszuführungen erzielen.

Zum Reinigen des Auslaufbereiches wird zunächst der Mischer vollständig entleert. Während des Entleervorgangs ist es nicht notwendig und häufig auch nicht erwünscht, Reinigungsflüssigkeit zuzuführen. Erst nach vollständiger Entleerung des Mischers und Entfernung des Mischguts aus dem Auslaufbereich werden die Düsen angesteuert, um die Reinigung zu bewirken. Während des Reinigungszyklus kann der Verschluss mehrfach auf- und zugefahren werden oder aber auch nur über Teilbereiche mit besonders starken Verschmutzungen verschwenkt werden. Da in der Regel das Mischgut beim Entleervorgang den Auslaufbereich nicht gleichmäßig kontaktiert und verschmutzt, kann so eine zielgerichtete Reinigungswirkung erzielt werden.

### Bezugszeichenliste

- 1: Mischer
- 2: Mischbehälter
- 3: Auslassöffnung
- 4: Verschlussdeckel
- 5: Schwenkarm
- 6: Schwenkachse
- 7: Drehachse
- 8: Lager
- 9: Mischgutauslauf
- 10: Reinigungsdüsen
- 11: Flüssigkeitszufuhr
- 12: Verteiler
- 13: Reinigungsdüsen
- 14: Reinigungsdüse
- 15, 15': Flüssigkeitszufuhr
- 16: Leitung
- 17: stationäre Leitung

## Patentansprüche

1. Mischer mit einem eine Auslassöffnung (3) aufweisenden Mischbehälter (2), einem Verschlussdeckel (4), welcher zwischen einer geschlossenen Position, in welcher der Verschlussdeckel (4) die Auslassöffnung (3) verschließt, und einer geöffneten Position, in welcher der Verschlussdeckel (4) die Auslassöffnung (3) freigibt, so dass Mischgut aus dem Mischbehälter (2) über die Auslassöffnung (3) entnommen werden kann, hin und her bewegt werden kann, zumindest einer Reinigungsdüse, zur Reinigung der Auslassöffnung (3) und/oder einem außerhalb des Mischbehälters (2) angeordneten Mischgutauslaufs (9), und einer Flüssigkeitszufuhr (11) zur Zufuhr von Reinigungsflüssigkeit zu der zumindest einen Reinigungsdüse, wobei die zumindest eine Reinigungsdüse am Verschlussdeckel (4) befestigt ist, so dass diese zusammen mit dem Verschlussdeckel bewegt werden kann, **dadurch gekennzeichnet, dass** der Verschlussdeckel (4) einen Schwenkarm (5) aufweist, welcher um eine Schwenkachse (6) drehbar gelagert ist, sodass der Verschlussdeckel (4) um die Schwenkachse (6) gedreht werden kann, wobei die Flüssigkeitszufuhr (11) durch die Schwenkachse (6) verläuft.

2. Mischer nach Anspruch 1, **dadurch gekennzeichnet, dass** der Mischer (1) einen Mischgutauslauf (9) mit einer Auslaufwand aufweist, welcher die Auslassöffnung (3) zumindest teilweise umgibt.

3. Mischer nach einem der Ansprüche 1 bis 2, **dadurch gekennzeichnet, dass** eine Mehrzahl von Reinigungsdüsen vorgesehen ist, die am Verschlussdeckel (4) befestigt sind, wobei die Reinigungsdüsen vorzugsweise derart ausgebildet sind, dass sie im Betrieb eine sich erweiternde Sprühstrahlform zeigen.

4. Mischer nach Anspruch 3, **dadurch gekennzeichnet, dass** die Mehrzahl von Reinigungsdüsen derart angeordnet ist, dass die Reinigungsdüsen zusammen eine teilringförmige oder ringförmige Sprühfläche um den Mittelpunkt der Anordnung herum erzeugen.

5. Mischer nach Anspruch 3 oder 4, **dadurch gekennzeichnet, dass** zumindest eine Reinigungsdüse in Richtung des Schwenkarms (5) und/oder der Schwenkachse (6) ausgerichtet ist.

6. Mischer nach einem der Ansprüche 1 bis 5, **dadurch gekennzeichnet, dass** die Reinigungsdüse relativ zu dem Verschlussdeckel (4) linear bewegbar, verschwenkbar oder drehbar ist.

## Claims

1. Mixer comprising a mixing container (2) having an outlet opening (3), a closure cover (4) which can be moved back and forth between a closed position in which the closure cover (4) closes the outlet opening (3) and an open position in which the closure cover (4) uncovers the outlet opening (3) so that mixture can be removed from the mixing container (2) via the outlet opening (3), at least one cleaning nozzle for cleaning the closure opening (3) and/or a mixture outflow region (9) arranged outside of the mixing container (2), and a liquid feed (11) to feed cleaning fluid to the at least one cleaning nozzle, wherein the at least one cleaning nozzle is fastened to the closure cover (4), so that this can be moved together with the closure cover, **characterised in that** the closure cover (4) has a swivel arm (5) which is mounted rotatably around a swivel axis (6) so that the closure cover (4) can be swivelled around a swivel axis (6), wherein the liquid feed (11) runs through the swivel axis (6).

2. Mixer according to claim 1, **characterised in that** the mixer (1) has a mixture outflow region (9) with an outflow wall which at least partially surrounds the outlet opening (3).

3. Mixer according to one of the claims 1 to 2, **characterised in that** a plurality of cleaning nozzles is provided which are fastened to the closure cover (4), wherein the cleaning nozzles are preferably configured such that in operation they produce a widening spray jet pattern.

4. Mixer according to claim 3, **characterised in that** the plurality of cleaning nozzles are arranged such that the cleaning nozzles together create a partially annular or annular sprayed area around the central point of the arrangement.

5. Mixer according to claim 3 or 4, **characterised in that** at least one cleaning nozzle is oriented in the direction of the swivel arm (5) and/or the swivel axis (6).

6. Mixer according to one of the claims 1 to 5, **characterised in that** the cleaning nozzle can be moved in a linear manner, swivelled or rotated relative to the closure cover (4).

## Revendications

1. Mélangeur comprenant un récipient de mélange (2) présentant une ouverture de sortie (3), un couvercle de fermeture (4) qui peut effectuer un mouvement de va-et-vient entre une position fermée, dans laquelle le couvercle de fermeture (4) ferme l'ouverture de sortie (3), et une position ouverte, dans laquelle le couvercle de fermeture (4) libère l'ouverture de sortie (3) de telle sorte que le produit mélangé puisse être prélevé à partir du récipient de mélange (2) via l'ouverture de sortie (3), au moins une buse de nettoyage pour un nettoyage de l'ouverture de sortie (3) et/ou d'une évacuation de produit mélangé (9) agencée à l'extérieur du récipient de mélange (2), et une alimentation en liquide (11) pour apporter le liquide de nettoyage à ladite au moins une buse de nettoyage,
ladite au moins une buse de nettoyage étant fixée au couvercle de fermeture (4) de manière à pouvoir être déplacée ensemble avec le couvercle de fermeture, **caractérisé en ce que** le couvercle de fermeture (4) comprend un bras pivotant (5) qui est monté de manière rotative autour d'un axe de pivotement (6), si bien que le couvercle de fermeture (4) puisse être tourné autour de l'axe de pivotement (6), l'apport en liquide (11) passant par l'axe de pivotement (6).

2. Mélangeur selon la revendication 1, **caractérisé en ce que** le mélangeur (1) comprend une évacuation de produit mélangé (9), avec une paroi de sortie, qui entoure au moins partiellement l'ouverture de sortie (3).

3. Mélangeur selon l'une des revendications 1 à 2, **caractérisé en ce qu'**une pluralité de buses de nettoyage sont prévues, qui sont fixées au couvercle de fermeture (4), les buses de nettoyage étant conçues de préférence de manière à montrer en fonctionnement une forme de jet de pulvérisation évasée.

4. Mélangeur selon la revendication 3, **caractérisé en ce que** la pluralité de buses de nettoyage sont agencées de telle sorte que les buses de nettoyage produisent ensemble une surface de pulvérisation partiellement annulaire ou annulaire autour du centre de l'agencement.

5. Mélangeur selon la revendication 3 ou 4, **caractérisé en ce qu'**au moins une buse de nettoyage est orientée dans la direction du bras pivotant (5) et/ou de l'axe de pivotement (6).

6. Mélangeur selon l'une des revendications 1 à 5, **caractérisé en ce que** la buse de nettoyage peut être déplacée de manière linéaire, pivotée ou tournée par rapport au couvercle de fermeture (4).
